Europäisches Patentamt

European Patent Office

Office européen des brevets

(11) Publication number: **0 182 345**
A2

# EUROPEAN PATENT APPLICATION

(21) Application number: 85114660.5

(22) Date of filing: 18.11.85

(51) Int. Cl.⁴: **C 04 B 35/10**, C 04 B 35/66, H 05 B 6/20, F 27 D 1/00

(30) Priority: 19.11.84 US 672506

(43) Date of publication of application: 28.05.86 Bulletin 86/22

(84) Designated Contracting States: **AT BE CH DE FR GB LI NL SE**

(71) Applicant: **ALUMINUM COMPANY OF AMERICA, Alcoa Building, Pittsburgh Pennsylvania (US)**

(72) Inventor: **Hammersmith, Virginia L., 3380 Oakdale Drive, Murrysville Pennsylvania (US)**
Inventor: **Ormesher, Robert J., Murrysville R.D. No. 3, Leechburg Pennsylvania (US)**

(74) Representative: **Baillie, Iain Cameron et al, c/o Ladas & Parry Isartorplatz 5, D-8000 München 2 (DE)**

(54) Improved channel inductor block for channel induction furnace and method of making same.

(57) An improved refractory inductor block (20) is provided for channel induction furnaces (2) for melting aluminium comprising a hearth (6) and an inductor (10). The improvement comprises casting the refractory inductor block (20) from a refractory resistant to corrosion by molten aluminium comprising 9.5 to 40 wt.% calcium aluminate, 0.5 to 10 wt.% of a borosilicate frit, and 60 to 90 wt.% of an aggregate consisting of an alumina-bearing compound, a silica-bearing compound or mixtures thereof. The refractory is cast around a solid core pattern (80) made from a material capable of desolidifying upon the application of heat, such as a wax pttern. The channel core pattern (80) is shaped to provide the desired channels (30) within the refractory inductor block (20). After formation of the green refractory, the mold material, such as wax, may be melted off and the refractory cured by firing at a temperature to from 760 to 871 °C. (1400 to 1600°F), preferably about 815.5 °C. (1500°F), for from 5 to 20 hours and preferably about 6 hours. To ensure temperature uniformity during firing, the temperature is slowly raised from ambient up to the firing temperature at a rate of up to 5.6 °C. per hour.

IMPROVED CHANNEL INDUCTOR BLOCK FOR
CHANNEL INDUCTION FURNACE AND METHOD OF MAKING SAME

This invention relates to channel induction furnaces. More particularly, this invention relates to an improved channel inductor block for use in the inductor portion of a channel induction furnace and a method of making the channel inductor block.

The melting of aluminum for the formation of alloys or processing of aluminum scrap is conventionally accomplished using fossil fueled furnaces, electric resistance furnaces, or coreless induction furnaces. A channel induction furnace can also be used for this purpose. A typical channel induction furnace includes an inductor portion which functions as a transformer or inductor with a magnetic iron core and a primary coil assembly on the core which passes through a refractory block containing an annular secondary cavity or "channel" for the melt. This channel contains molten metal, such as molten aluminum, which forms the secondary winding for the transformer. The induced magnetic field in the molten metal secondary not only heats the aluminum but causes circulation of the molten aluminum throughout the furnace resulting in exceptional composition and temperature uniformity throughout the furnace. Such channel inductor furnaces are described in Tama U.S. Patent 2,347,298 and Tama et al U.S. Patent 3,092,682.

U.S. 672,506 HAMME

In the past, however, problems have arisen with regard to plugging of the channels in the inductor block with oxides particularly when the furnace was used to melt aluminum. This problem has been largely overcome by streamlining the design of the channels and designing the primary coil windings to circulate the molten aluminum at high velocities. However, the refractory material used to form the channel through which the molten aluminum flows has been subject to erosion problems due to difficulties associated with the firing of the refractory. This erosion has been exacerbated by the increased velocities employed to avoid plugging of the channels, resulting in further erosion and shorter life for the refractory.

The refractory erosion resulting from contact with molten aluminum being circulated at high velocity through the channels, is also, at least in part, due to the choice of refractory materials used and the curing method employed to develop good physical properties. In the past, refractory materials have been dry rammed and fired in place with a burnout channel core pattern, such as wood, used for the channels themselves with the primary coils of the inductor continuously water cooled for protection. It has, therefore, been impossible to properly cure the refractory materials to any appreciable thickness. Usually, curing was done with manual heating means to both burn out the wood form and cure the refractory while simultaneously cooling the inductor coils. This method, however, results in nonuniform firing temperatures being applied to the refractory material throughout its thickness. In some instances, a more corrosion resistant castable material might exist but could not be employed because of increased shrinkage and the probability of water remaining due to uneven refractory dryout.

Examples of castable refractory materials which exhibit excellent corrosion resistance when in contact with molten aluminum include the types of materials described in LaBar U.S. Patents 4,088,502 and 4,158,568 and Hines et al U.S. Patent 4,348,236. However, to achieve the resistance to corrosion from molten aluminum which these castable refractory materials are capable of exhibiting, it is necessary that the refractory material be properly and uniformly fired throughout the material.

According to the invention there is provided an improved refractory inductor block for a channel induction furnace for melting aluminum comprising a hearth and an inductor having a magnetic iron core and a primary coil assembly passing through openings in a refractory inductor block containing channels through which pass molten aluminum and which comprises a secondary winding magnetically coupled to said primary coil assembly, characterized by said improved refractory inductor block being formed from a refractory mix resistant to corrosion by molten aluminum comprising 9.5 to 40 wt.% calcium aluminate, 0.5 to 10 wt.% of a borosilicate frit and 60 to 90 wt.% of an aggregate selected from the group consisting of alumina-bearing compounds, silica-bearing compounds, and mixtures thereof.

Also provided is an improved refractory inductor block for a channel induction furnace exhibiting an enhanced resistance to deterioration by contact with molten aluminum, characterized by said improved refractory inductor block comprising a uniformly fired ceramic formed from a refractory mix resistant to corrosion by molten aluminum comprising calcium aluminate, alumina and a borosilicate frit, in a ratio sufficient to maintain said resistance to corrosion by molten aluminum, cast around a channel core pattern capable of desolidifying when exposed to elevated temperatures to form channels in said refractory inductor block, said mix being fired at a temperature of from 760 to 871°C. (1400 to 1600°F.) for from 5 to 20 hours to fire said refractory inductor block, said resultant fired refractory inductor block being capable of withstanding deterioration from contact with molten aluminum.

Also provided is a method for making a refractory inductor block for a channel induction furnace for melting aluminum wherein an inductor comprises a magnetic iron core and a primary coil assembly mounted in openings in a refractory inductor block to provide magnetic coupling to a secondary winding comprising molten aluminum in channels formed in said refractory inductor block, characterized by comprising forming said refractory inductor block using removable channel core patterns and refractory material resistant to corrosion by molten aluminum comprising 9.5 to 40 wt.% calcium aluminate, 0.5 to 10 wt.% of a borosilicate frit and 60 to 90 wt.% of an aggregate selected from the group consisting of alumina-bearing compounds, silica-bearing compounds, and mixtures thereof whereby deterioration of said refractory inductor block, by said molten aluminum flowing through said channels, will be inhibited.

Further provided is an improved method for making a refractory inductor block for a channel induction furnace exhibiting an enhanced resistance to deterioration by contact with molten aluminum, characterized by comprising the steps of:

(a) constructing a channel core pattern from a material capable of desolidifying when exposed to elevated temperatures to form channels in said refractory inductor block;

(b) forming a refractory mix capable of resisting corrosion by molten aluminum comprising calcium aluminate, alumina and a borosilicate frit in a ratio sufficient to maintain said corrosion resistance;

(c) casting said refractory inductor block from said refractory mix in a mold block containing said channel core pattern therein; and

(d) heating said refractory inductor block at a temperature of from 760 to 871°C. (1400 to 1600°F.) for from 5 to 20 hours to fire said refractory inductor block and desolidify said channel core pattern therein;

whereby a fired refractory inductor block will be formed capable of withstanding deterioration from contact with molten aluminum.

In accordance with the invention, an improvement is provided in channel induction furnaces for melting aluminum having a hearth and an inductor. The inductor comprises a magnetic iron core and a primary coil assembly passing through openings in a refractory inductor block containing channels through which passes molten aluminum which comprises a secondary winding magnetically coupled to the primary coil assembly. The improvement comprises casting the refractory inductor block from a corrosion resistant refractory consisting essentially of 9.5 to 40 wt.% calcium aluminate, 0.5 to 10% of a borosilicate frit, and 60 to 90 wt.% of an aggregate selected from the group consisting of alumina-bearing or silica-bearing compounds or mixtures thereof. Preferably, the corrosion resistant refractory mix consists essentially of 10 to 20 wt.% calcium aluminate, 0.5 to 1.5 wt.% of a borosilicate frit, and 79.5 to 89.5 wt.% alumina. The refractory is cast around a solid core pattern made from a material capable of desolidifying upon the application of heat, such as a wax core. The channel core pattern is shaped to provide the desired channels within the refractory inductor block. After formation of the green refractory, the core pattern material, such as wax, may be melted off and the refractory cured by firing at a temperature of from 760 to 871°C (1400 to 1600°F), preferably about 815.5°C (1500°F) for from 5 to 20 hours and preferably about 6 hours. To ensure temperature uniformity during firing, the temperature is slowly raised from ambient up to the firing temperature at a rate of up to about 5.6°C. (10°F. per hour).

In the accompanying drawings:

Figure 1 is an isometric cutaway view of a channel induction furnace.

Figure 2 is a vertical cross-sectional view of a channel induction furnace showing the channels within the refractory and the flow of molten metal through these channels.

Figure 3 is an exploded isometric view of the channel core pattern, the transition pieces and the top throat mold used to form the cavities of the inductor block.

Figure 4 is a cutaway isometric view of the inductor block in its mold with the channel core pattern, transition and top throat mold pieces all in place. The mold cores used to form the cavities for the inductor coils are shown removed.

Figure 5 is a partially cutaway isometric view of the inductor block of the invention.

Figure 6 is a partially cutaway isometric view of the cured refractory block mounted in the inductor casing. This view also shows the bottom and sidewall thermal insulation, the top refractory seal and the inductor coils wrapped around the laminated iron transformer core.

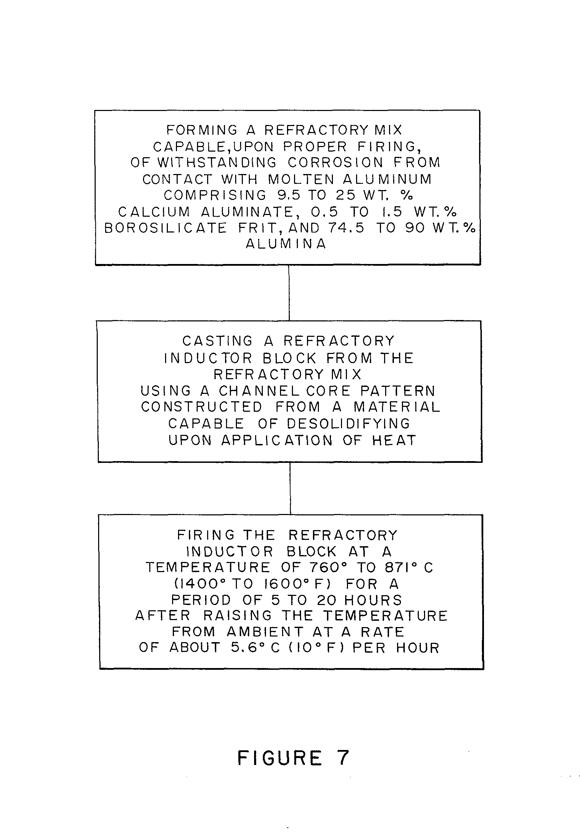

Figure 7 is a flow sheet illustrating the process steps of the invention.

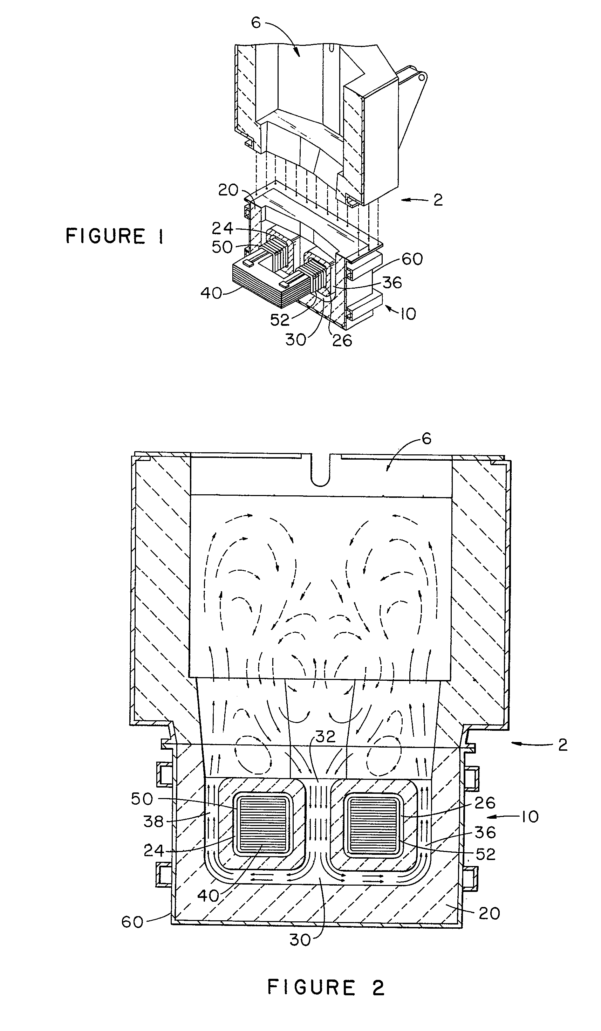

Referring now particularly to Figures 1 and 2, a channel induction furnace is generally indicated at 2 comprising a detachable upper hearth portion 6 and a lower inductor portion 10. Inductor 10 includes a casing 60 having mounted therein refractory 20 having channels 30 therein through which molten aluminum flows as the secondary winding of a transformer or inductor. An iron core 40 is threaded through openings 24 and 26 in inductor lining 20. Iron core 40 carries primary coils 50 and 52 thereon.

In the operation of an induction furnace, current, applied to primary coils 50 and 62, induces a current flow in the molten metal flowing through channels 30 which comprises the secondary coil of the transformer or inductor. The induced current in the molten metal secondary causes downward metal flow in central channel 32, as shown in Figure 2. The metal flow then divides with approximately one half of the metal flowing through channel 36 back out into the hearth 6 with the remainder of the metal flowing through channel 38 to also enter the hearth portion 6 of furnace 2. It will be appreciated that the flow of molten metal through the channels, particularly at a sufficient velocity to prevent clogging of the channels with any oxide materials, as well as the indicated changes in direction of flow may cause erosion of the adjoining refractory walls, depending upon the type of refractory used and the sufficiency of curing or firing of the refractory.

As previously discussed, prior attempts at forming refractory inductor block 20 by ramming in place a dry mix of refractory material around the iron core and a channel core pattern, such as wood which was then burned away, resulted in an incomplete firing of the refractory due to the need to maintain cooling adjacent the metal portions, such as either the iron core or the primary windings, during the firing of the refractory material.

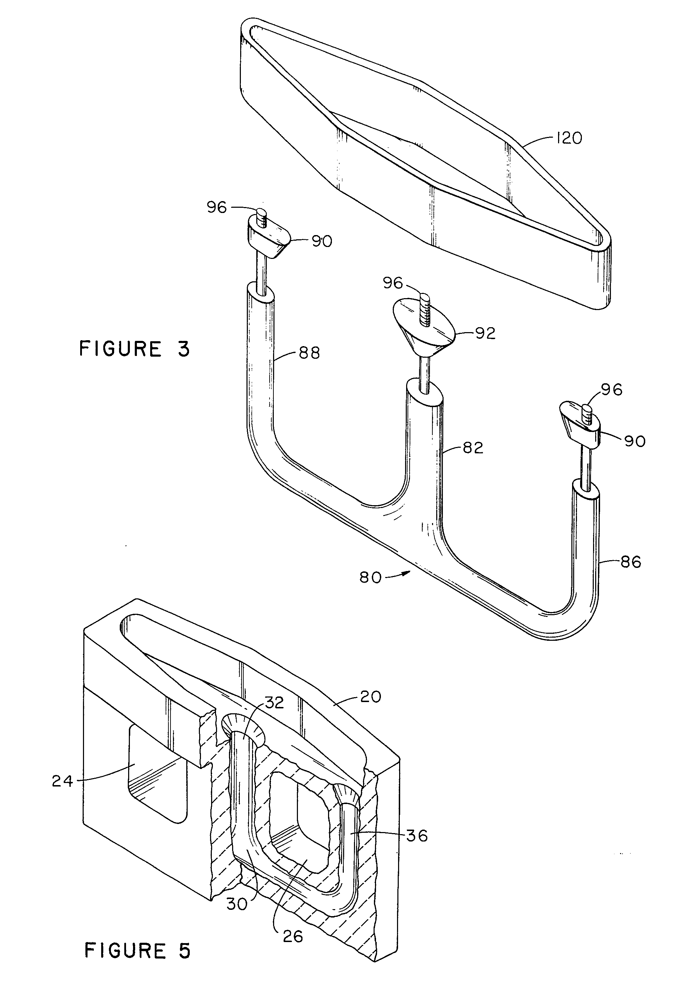

Turning now to Figure 3, a channel core pattern 80 is illustrated which, in accordance with one aspect of the invention, comprises a low melting material, such as a paraffin wax material, which may be used to form channels 30 in the refractory inductor block of the invention. Core pattern 80 includes a large diameter central portion 82 which will form the central channel 32 and reduced diameter wing portions 86 and 88 which will, respectively, form channels 36 and 38 in the resultant inductor block. Materials other than wax may be used for channel core pattern 80.  Preferably, however, channel core pattern 80 should be made of a material which can be removed by desolidifying, such as by volatilizing or decomposing or the like, without leaving any substantial residue upon exposure to heat rather than charring or burning as might be the case with materials, such as wood or some plastics.  In any event, the material chosen will be one which will, upon its removal, leave a very smooth surface in the refractory inductor block channels to permit streamlined nonturbulent flow of the molten aluminum without providing ridges or discontinuities which may cause erosion and wear.

In a preferred embodiment, to make channel core pattern 80 of low melting material, a wood pattern designed and constructed by the inductor manufacturer may be purchased and used to make a plaster split mold.  This plaster mold is then used to form the channel core pattern 80 made of low melting material, such as paraffin wax.  Large diameter machine screws 96 are cast into the top portion of the center channel 82 and the side channels 86 and 88 using the top mold block 120 as a template.  These screws then properly locate and hold the top mold block 120 and transition members 90 and 92 to the channel core pattern 80 during the refractory casting.

In accordance with the invention, the refractory mix used in forming the inductor block comprises a mixture of calcium aluminate, borosilicate frit and an aggregate selected from the group consisting of an alumina-bearing compound, a silica-bearing compound and mixtures thereof.  The mixture preferably consists essentially of 74.5 to 90%, and preferably 79.5 to 89.5 wt.% alumina, 9.5 to 25 wt.%, and preferably 10 to 20 wt.% calcium aluminate and 0.5 to 1.5 wt.% borosilicate frit.

When alumina is utilized as the aggregate, it may be tabular alumina, and its particle size is preferably controlled such that 20 to 40 wt.% of the alumina particles are between 1.41 mm and 4.76 mm in size, 15 to 30 wt.% are between 0.297 mm and 1.41 mm in size, and 25 to 40 wt.% are less than 0.297 mm in size.

When silica is used as the aggregate, it may be used in a particle size range of about -4 mesh (U.S. Standard). Preferably, the silica particle mixture contains about 50 wt.% particles of -10 to +325 mesh with the balance smaller. Most preferably, about 20 to 30 wt.% of the particles are -10 to +20 mesh, about 15 to 25 wt.% -20 to +100 mesh and the balance -100 mesh.

The calcium aluminate which is used in the invention may be obtained from a variety of commercial sources. In a preferred embodiment of the invention, the calcium aluminate comprises a mixture of 75 to 83 wt.% aluminum oxide and 14 to 23 wt.% calcium oxide, with a total of no more than 3 wt.% of other oxides, primarily zinc oxide, boron oxide and silicon dioxide. Such a calcium aluminate product is sold by the Aluminum Company of America under the designation "CA-25". The particle size of the calcium aluminate is preferably controlled so that at least 90 wt.% is less than 0.044 mm.

The borosilicate frit consists essentially of 15 to 35 wt.% boron oxide; 5 to 30 wt.% silicon dioxide; 10 to 60 wt.% of a metal selected from the class consisting of zinc oxide, lead oxide and calcium oxide; and a total of no more than 20 wt.% alkali compounds, such as lithium oxide, sodium oxide and potassium oxide. The preferred frit also contains 5 to 25 wt.% fluorine, and its particle size is controlled to less than 0.149 mm.

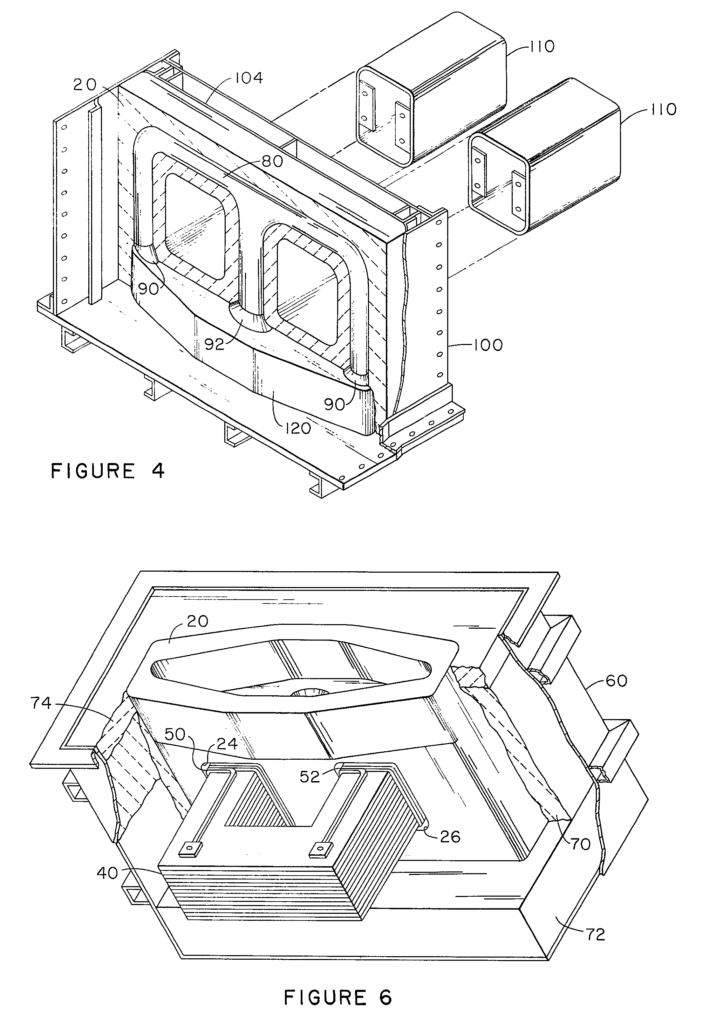

To form the refractory inductor block of the invention, the top throat mold 120, the transition pieces 90 and 92 and the channel core pattern 80 are all assembled and anchored upside down in mold 100, as shown in Figure 4. The coil core mold pieces 110 are then placed in mold 100 and anchored to the sidewalls 104 of mold 100. The refractory mix is then poured into the mold using a stick vibrator during the fill to make sure all air bubbles have been removed and that the fill is complete.

The refractory material is first cured for a period of from 6 to 10 hours at from about 21 to 32°C (70 to 90°F.) and then dried to remove physically absorbed water for from 20 to 30 hours at from 35 to 110°C (95 to 230°F). Top mold block 120 and transition pieces 90 and 92 are then removed, and mold blocks 110 are removed through the sidewall of container mold 100. The green refractory inductor block 20 is then removed from container mold 100. The resulting green refractory inductor block 20 only contains channel core pattern 80 therein which may be melted out prior to the firing operation.

The green refractory inductor block 20, as seen in Figure 5, in accordance with the invention, is now fired. The firing is carried out at a temperature of from about 760 to 871°C (1400 to 1600°F), preferably about 815.5°C (1500°F), for from 5 to 20 hours, preferably 6 hours. Most preferably, the firing is done at 815.5°C (1500°F) for 6 hours with a maximum temperature variation of $\pm$ 2.78°C (5°F). The green refractory is brought up to the firing temperature slowly at a rate of about 5.6°C (10°F) climb per hour until the 815.5°C (1500°F) firing temperature is reached. After the firing time has elapsed, the furnace is shut off, and the fired refractory inductor block 20 is allowed to cool, on its own in the closed furnace, back to ambient temperature.

Refractory inductor block 20 is now ready for installation in casing 60, as shown in Figure 6. The bottom castable insulation layer 72 is poured into casing 60 to the proper depth (12 inches) and permitted to air dry and harden. Inductor block 20 is positioned in casing 60 on insulation layer 72 and a castable insulation material 70, such as a calcium aluminate mixture, is poured into casing 60 around refractory inductor block 20 to hold block 20 in place. Pouring the top refractory seal 74 in place flush with the top of inductor block 20 and the top flange of the casing 60 completes the lining. It should be noted here that insulation materials 70 and 72 need not be precisely fired and cured to properly function, in contrast to the prior art rammed mix procedure, because insulation 70 and 72 do not come in contact with the molten aluminum. The function of insulation 70 and 72 is to hold refractory inductor block 20 in alignment with casing 60 and provide thermal insulation for the whole system.

After refractory inductor block 20 has been mounted in casing 60, iron core 40 with coils 50 and 52 thereon are mounted through openings 24 and 26 in block 20 and the corresponding openings in casing 60.

Hearth member 6 is then secured to inductor 10, coils 50 and 52 connected to an external power source, and molten aluminum is poured into preheated hearth 6 to enter the channels 30 formed in induction block 20 to form the secondary coil of the transformer or inductor. In accordance with the invention, the erosion or abrasion of refractory inductor block 20 by the flow of molten aluminum in channels 30 will be substantially mitigated.

In a test conducted to determine the resistance to abrasion by molten aluminum of an inductor block formed in accordance with the invention, a refractory inductor block was cast from a mixture consisting essentially (in wt.%) of 80 to 85% alumina, 14 to 18% calcium aluminate and 0.5 to 1.5% of a borosilicate frit consisting essentially of about 21.5% $B_2O_3$, 12.2% F, 15.3% $Na_2O$, 3.0% MgO, 0.7% $Al_2O_3$, 25.1% $SiO_2$ and 22.2% CaO. The dry refractory mixture was blended with an amount of water equal to about 5 to 8 wt.% of the dry mix weight. The mixture was cast around a wax channel core pattern and cured at 21 to 32°C for about 8 hours. The cured block was then dried to remove physically absorbed water for about 24 hours at 35 to 110°C. The channel core pattern was melted out by heating to 135°C. The block was then fired by raising the temperature in a shuttle kiln from ambient about 5.6°C (10°F) per hour up to 815.5°C (1500°F). The refractory was fired for 6 hours while maintaining this temperature ± 2.78°C (± 5°F). The block was allowed to cool back to room temperature. The resultant fired refractory inductor block was then mounted in a channel induction furnace, which was operated successfully for 225 days not limited by refractory life and far beyond that previously experienced with prior art lining types.

Thus, the invention provides an improved refractory inductor block and a method of making same wherein a refractory mix capable, after firing, of withstanding corrosion and erosion by contact with molten aluminum, is molded around a channel core pattern made from a material, such as wax, capable of desolidifying upon the application of heat. The green refractory block is heated to remove the channel core pattern and then further heated under carefully controlled conditions to uniformly fire the refractory to obtain the desired properties of corrosion and abrasion resistance to molten aluminum in finished refractory inductor block product.

-1-

## C L A I M S

1.        An improved refractory inductor block (20) for a channel induction furnace (2) for melting aluminum comprising a hearth (6) and an inductor (10) having a magnetic iron core (40) and a primary coil (50,52) assembly passing through openings in a refractory inductor block (20) containing channels (30) through which pass molten aluminum and which comprises a secondary winding magnetically coupled to said primary coil assembly, characterized by said improved refractory inductor block (20) being formed from a refractory mix resistant to corrosion by molten aluminum comprising 9.5 to 40 wt.% calcium aluminate, 0.5 to 10 wt.% of a borosilicate frit and 60 to 90 wt.% of an aggregate consisting of alumina-bearing compounds, silica-bearing compounds or mixtures thereof.

2.        An inductor block of claim 1, characterized in that said refractory mix comprises 10 to 20 wt.% calcium aluminate, 79.5 to 89.5 wt.% alumina and 0.5 to 1.5 wt.% borosilicate frit.

3.        An inductor block of claim 2, characterized in that said borosilicate frit comprises 15 to 35 wt.% boron oxide, 5 to 30 wt.% silicon dioxide and 10 to 60 wt.% of a metal oxide consisting of zinc oxide, lead oxide or calcium oxide, and preferably includes a total of no more than 20 wt.% alkali metal oxides, most preferably 10 to 20 wt.% alkali metal oxides and 5 to 25 wt.% fluorine.

4.        An improved refractory inductor block (20) for a channel induction furnace (2) exhibiting an enhanced resistance to deterioration by contact with molten aluminum, characterized by said improved refractory inductor block (20) comprising a uniformly fired ceramic formed from a refractory mix resistant to corrosion by molten aluminum comprising calcium aluminate, alumina and a borosilicate frit, in a ratio sufficient to maintain said resistance to corrosion by molten aluminum, cast around a channel
core pattern (80) capable of desolidifying when exposed
to elevated temperatures to form channels (30) in said
refractory inductor block (20), said mix being fired at
a temperature of from 760 to 871°C. (1400 to 1600°F.)
for from 5 to 20 hours to fire said refractory inductor
block (20), said resultant fired refractory inductor block
(20) being capable of withstanding deterioration from
contact with molten aluminum.

5.      A method for making a refractory inductor block
(20) for a channel induction furnace (2) for melting
aluminum wherein an inductor (10) comprises a magnetic
iron core (40) and a primary coil (50,52) assembly
mounted in openings in a refractory inductor block (20)
to provide magnetic coupling to a secondary winding comprising molten aluminum in channels (30) formed in said
refractory inductor block (20), characterized by comprising forming said refractory inductor block (20)
using removable channel core patterns (80) and refractory
material resistant to corrosion by molten aluminum comprising 9.5 to 40 wt.% calcium aluminate, 0.5 to 10 wt.%
of a borosilicate frit and 60 to 90 wt.% of an aggregate
consisting of alumina-bearing compounds, silica-bearing
compounds or mixtures thereof whereby deterioration of
said refractory inductor block (20), by said molten
aluminum flowing through said channels (30), will be
inhibited.

6.      The method of claim 5, characterized by including the step of firing said refractory material for
from 5 to 20 hours at a temperature of from 760 to 871°C.
(1400 to 1600°F.), preferably about 815.5°C. (1500°F.) for
at least 6 hours, and optionally also including one or
more of the steps of raising the temperature of said
refractory material from ambient to said firing temperature at a rate not exceeding 5.6°C. (10°F.) per hour,
curing said refractory material prior to firing for a period of from 6 to 10 hours at a temperature of from 21 to 32°C. (70 to 90°F.), and/or drying the cured refractory mix for a period of from 20 to 30 hours at a temperature of from 35 to 110°C. (95 to 230°F.) to remove physically absorbed water from the refractory mix prior to said firing step.

7.      An improved method for making a refractory inductor block (20) for a channel induction furnace (2) exhibiting an enhanced resistance to deterioration by contact with molten aluminum, characterized by comprising the steps of:

(a)   constructing a channel core pattern (80) from a meterial capable of desolidifying when exposed to elevated temperatures to form channels (30) in said refractory inductor block (20);

(b)   forming a refractory mix capable of resisting corrosion by molten aluminum comprising calcium aluminate, alumina and a borosilicate frit in a ratio sufficient to maintain said corrosion resistance;

(c)   casting said refractory inductor block (20) from said refractory mix in a mold block (100) containing said channel core pattern (80) therein; and

(d)   heating said refractory inductor block (20) at a temperature of from 760 to 871°C. (1400 to 1600°F.) for from 5 to 20 hours to fire said refractory inductor block (20) and desolidify said channel core pattern (80) therein;

whereby a fired refractory inductor block (20) will be formed capable of withstanding deterioration from contact with molten aluminum.

8.      The method of claim 7, characterized by including the step of forming said channel core pattern (80) from a material such as wax, capable of decomposing or volatilizing at or below said firing temperatures without leaving a residue.

9.      The method of claim 7 or 8, characterized in that said block is heated to a first temperature below the

-4-

firing temperature to remove the core pattern prior to firing said inductor mold block, said method optionally including one or both of the steps of heating said refractory inductor block to a temperature of 35 to 110°C. (95 to 230°F.) for 20 to 30 hours to remove physically absorbed water prior to firing said refractory inductor block, and/or slowly heating said refractory inductor block to a firing temperature of about 815.5°C. (1500°F.) at a rate of up to 5.6°C. (10°F.) per hour and then maintained at this firing temperature for at least 6 hours.

10.      The method of claim 9, wherein said refractory mix comprises 9.5 to 25 wt.% calcium aluminate, 74.5 to 90 wt.% alumina and  0.5 to 1.5 wt.% borosilicate frit, the method preferably including one or more of the steps of using a borosilicate frit comprising 15 to 35 wt.% boron oxide, 5 to 30 wt.% silicon oxide and 10 to 25 wt.% alkali metal oxides, said frit having an average particle size of less than 0.149 mm, using in said borosilicate frit from 5 to 25 wt.% fluorine, using a calcium aluminate comprising a mixture of 75 to 83 wt.% aluminum oxide and 14 to 23 wt.% calcium oxide with a total of no more than 3 wt.% of other oxides with at least 90 wt.% of said calcium aluminate having a particle size of less than 0.044 mm, and/or using alumina having a particle size distribution of about 40 wt.% between 1.41 mm and 4.76 mm, 15 to 30 wt.% between 0.297 mm and 1.41 mm, and 25 to 40 wt.% less than 0.297 mm.

1/4

0 182 345

FIGURE 1

FIGURE 2

120

96

90

96

88

92

96

82

90

80

86

**FIGURE 3**

20

32

24

36

30

26

**FIGURE 5**

FIGURE 4

FIGURE 6

44

FORMING A REFRACTORY MIX
CAPABLE, UPON PROPER FIRING,
OF WITHSTANDING CORROSION FROM
CONTACT WITH MOLTEN ALUMINUM
COMPRISING 9.5 TO 25 WT. %
CALCIUM ALUMINATE, 0.5 TO 1.5 WT. %
BOROSILICATE FRIT, AND 74.5 TO 90 WT. %
ALUMINA

CASTING A REFRACTORY
INDUCTOR BLOCK FROM THE
REFRACTORY MIX
USING A CHANNEL CORE PATTERN
CONSTRUCTED FROM A MATERIAL
CAPABLE OF DESOLIDIFYING
UPON APPLICATION OF HEAT

FIRING THE REFRACTORY
INDUCTOR BLOCK AT A
TEMPERATURE OF 760° TO 871° C
(1400° TO 1600°F) FOR A
PERIOD OF 5 TO 20 HOURS
AFTER RAISING THE TEMPERATURE
FROM AMBIENT AT A RATE
OF ABOUT 5.6° C (10°F) PER HOUR

FIGURE 7